(19) Europäisches Patentamt
European Patent Office
Office européen des brevets

(11) **EP 3 923 379 B1**

(12) **EUROPEAN PATENT SPECIFICATION**

(45) Date of publication and mention
of the grant of the patent:
**29.04.2026 Bulletin 2026/18**

(21) Application number: **21177235.5**

(22) Date of filing: **01.06.2021**

(51) International Patent Classification (IPC):
*H01M 4/131* (2010.01)    *H01M 4/36* (2006.01)
*H01M 4/525* (2010.01)

(52) Cooperative Patent Classification (CPC):
**H01M 4/366; H01M 4/131; H01M 4/525;**
H01M 2004/028; Y02E 60/10

(54) **COMPOSITE CATHODE ACTIVE MATERIAL, CATHODE INCLUDING THE SAME, LITHIUM BATTERY EMPLOYING THE CATHODE, AND PREPARATION METHOD THEREOF**

VERBUNDKATHODENAKTIVMATERIAL, KATHODE DAMIT, LITHIUMBATTERIE MIT ANWENDUNG DER KATHODE UND HERSTELLUNGSVERFAHREN DAFÜR

MATÉRIAU ACTIF DE CATHODE COMPOSITE, CATHODE LE COMPRENANT, BATTERIE AU LITHIUM UTILISANT LA CATHODE ET PROCÉDÉ DE PRÉPARATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2020 KR 20200066015**

(43) Date of publication of application:
**15.12.2021 Bulletin 2021/50**

(73) Proprietor: **Samsung SDI Co., Ltd.**
**Yongin-si, Gyeonggi-do 17084 (KR)**

(72) Inventors:
• **SON, Inhyuk**
 **17084 Yongin-si (KR)**
• **MAH, Sangkook**
 **17084 Yongin-si (KR)**
• **JO, Sungnim**
 **17084 Yongin-si (KR)**
• **KIM, Guesung**
 **17084 Yongin-si (KR)**
• **MOON, Jongseok**
 **17084 Yongin-si (KR)**
• **KAPYLOU, Andrei**
 **17084 Yongin-si (KR)**

(74) Representative: **Marks & Clerk LLP**
**15 Fetter Lane**
**London EC4A 1BW (GB)**

(56) References cited:
**US-A1- 2010 310 940    US-A1- 2014 377 655**
**US-A1- 2015 037 680**

• **DOU SHUMEI: "Review and prospect of layered lithium nickel manganese oxide as cathode materials for Li-ion batteries", vol. 17, no. 4, 1 April 2013 (2013-04-01), DE, pages 911 - 926, XP055843229, ISSN: 1432-8488, Retrieved from the Internet <URL:https://link.springer.com/content/pdf/10.1007/s10008-012-1977-z.pdf> DOI: 10.1007/s10008-012-1977-z**

EP 3 923 379 B1

## Description

## BACKGROUND

### 1. Field

One or more aspects of embodiments of the present invention relate to a composite cathode active material, a cathode including the composite cathode active material and a lithium battery employing the cathode. A method of preparing the composite cathode active material is also disclosed herein to aid understanding of the present invention.

### 2. Description of the Related Art

In order to meet the miniaturization and high performance requirements of various devices, in addition to miniaturization and weight reduction of lithium batteries, high energy density of lithium batteries is becoming more important. For example, high-capacity lithium batteries are becoming more important.

In order to implement lithium batteries suitable for the above uses, cathode active materials having a high capacity are being developed.

Nickel-based cathode active materials in the art have poor lifetime characteristics and poor thermal stability due to side reactions.

Accordingly, there is a need for methods capable of preventing the deterioration of battery performance while including a nickel-based cathode active material.

US 2015/037680 A1 relates to a composite cathode active material, a lithium battery including such a composite and a preparation method for such a composite.

## SUMMARY

One or more aspects of embodiments of the present disclosure are directed toward a novel composite cathode active material capable of reduced deterioration of battery performance, for example by suppressing the side reactions of the composite cathode active material.

One or more aspects of embodiments of the present disclosure are directed toward a cathode including the composite cathode active material.

One or more aspects of embodiments of the present disclosure are directed toward a lithium battery employing the cathode.

Also disclosed herein to aid understanding the present invention is a method of preparing the composite cathode active material.

Additional aspects will be set forth in part in the description which follows and, in part, will be apparent from the description, or may be learned by practice of the presented embodiments of the disclosure.

One or more embodiments of the present disclosure provide a composite cathode active material including:

a core including a lithium transition metal oxide; and
a shell disposed on and conformal to a surface of the core,
wherein the shell includes at least one first metal oxide represented by Formula $M_aO_b$ ($0<a\leq3$, $0<b<4$, when a is 1, 2, or 3, b is not an integer), a second metal oxide represented by $M_aO_c$ ($0<a\leq3$, $0<c\leq4$, provided that when a is 1, 2, or 3, c is an integer), a carbonaceous material, and
the first metal oxide is placed in (e.g., disposed within) a matrix of the carbonaceous material, M is at least one metal selected from Groups 2 to 13, Group 15, and Group 16 of the Periodic Table of Elements,
the second metal oxide includes the same metal as the first metal oxide, and a ratio c/a of c to a in the second metal oxide is greater than a ratio b/a of b to a in the first metal oxide, and
the first metal oxide is a reduction product of the second metal oxide.

One or more embodiments of the present disclosure provide a cathode including the composite cathode active material.

One or more embodiments of the present disclosure provide a lithium battery including the cathode.

Also disclosed herein to aid understanding the present invention is a method of preparing a composite cathode active material, including:

providing a lithium transition metal oxide;
providing a composite; and

mechanically milling the lithium transition metal oxide and the composite,

wherein the composite includes at least one first metal oxide represented by Formula $M_aO_b$ ($0<a\leq3$, $0<b<4$, when a is 1, 2, or 3, b is not an integer), and a carbonaceous material, and

the first metal oxide is placed in a matrix of the carbonaceous material, and M is at least one metal selected from Groups 2 to 13, Group 15, and Group 16 of the Periodic Table of Elements. At least some of the above and other features of the invention are set out in the claims.

## BRIEF DESCRIPTION OF THE DRAWING

The above and other aspects, features, and advantages of certain embodiments of the disclosure will be more apparent from description taken in conjunction with the accompanying drawing, which is a schematic view of a lithium battery according to an embodiment.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described with reference to the drawings to explain aspects of the present description. As utilized herein, the term "and/or" includes any and all combinations of one or more of the associated listed items. Expressions such as "at least one of," "one of," and "selected from," when preceding a list of elements, modify the entire list of elements and do not modify the individual elements of the list.

Embodiments of the present disclosure may be variously modified and may have various suitable embodiments, and selected embodiments are illustrated in the drawings and described in more detail in the detailed description. However, this is not intended to limit the present disclosure, and the disclosure should be understood to include all modifications, equivalents, or substitutes included in the technical scope.

The terms used herein are only used to describe the embodiments, and are not intended to limit the present disclosure. Singular expressions and forms such as forms "a," "an," and "the" include plural expressions as well, unless the context clearly indicates otherwise. The terms "comprise", "include" or "have," when used in this specification, specify the presence of stated features, integers, steps, operations, elements, and/or components, but do not preclude the presence or addition of one or more other features, integers, steps, operations, elements, components, and/or groups thereof. "/" as used herein may be interpreted as "and" or as "or" depending on the situation.

In the drawings, thicknesses and dimensions may be enlarged or reduced in order to clearly illustrate layers and/or regions. Throughout the specification, when a component such as a layer, a film, a region, or a plate is mentioned to be placed "on" another component, it will be understood that it may be directly on another component or that another component may be interposed therebetween. In contrast, when an element is referred to as being "directly on," another element, there are no intervening elements present. Throughout the specification, although the terms "first", "second", "third", etc., may be used herein to describe various elements, components, regions, and/or layers, these elements, components, regions, and/or layers should not be limited by these terms. These terms are only used to distinguish one component from another component.

As used herein, the terms "use," "using," and "used" may be considered synonymous with the terms "utilize," "utilizing," and "utilized," respectively. Further, the use of "may" when describing embodiments of the present disclosure refers to "one or more embodiments of the present disclosure".

Hereinafter, a composite cathode active material according to embodiments, a cathode including the composite cathode active material, a lithium battery including the cathode, and a method of preparing the composite cathode active material will be described in more detail.

A composite cathode active material according to embodiments includes: a core including a lithium transition metal oxide; and a shell disposed on and conformal to a surface of the core, wherein the shell includes at least one first metal oxide represented by Formula $M_aO_b$ ($0<as<3$, $0<b<4$, when a is 1, 2, or 3, b is not an integer), a second metal oxide represented by $M_aO_c$ ($0<a\leq3$, $0<c\leq4$, provided that when a is 1, 2, or 3, c is an integer) and a carbonaceous material, the first metal oxide is placed in a matrix of the carbonaceous material, M is at least one metal selected from Groups 2 to 13, Group 15, and Group 16 of the Periodic Table of Elements, the second metal oxide includes the same metal as the first metal oxide, a ratio c/a of c to a in the second metal oxide is greater than a ratio b/a of b to a in the first metal oxide, and the first metal oxide is a reduction product of the second metal oxide.

Hereinafter, a theoretical basis for providing an excellent or suitable effect of the composite cathode active material according to an embodiment will be described, but this is to aid understanding of the present disclosure and is not intended to limit the present disclosure in any way.

A shell including a first metal oxide and a carbonaceous material is disposed on and/or conformal to a core of the composite cathode active material. Uniform coating of related art carbonaceous material on the core is difficult due to aggregation. However, the composite cathode active material uses a composite including at least one first metal oxide or a plurality of first metal oxides disposed within a carbonaceous material matrix (e.g., a matrix of the carbonaceous material) to thereby prevent or reduce aggregation of the carbonaceous material to produce a substantially uniform shell on the core. Accordingly, contact between the core and an electrolyte may be effectively blocked, thereby preventing or reducing side reactions due to contact between the core and the electrolyte. Further, the mixing of cations due to the electrolyte may be suppressed or reduced, thereby preventing or reducing the formation of a resistance layer. Moreover, elution of transition metal ions may also be suppressed or reduced. The carbonaceous material may be, for example, a crystalline carbonaceous material. The carbonaceous material may be or include a carbonaceous nanostructure. The carbonaceous material may be a graphene. Because the shell including carbonaceous material has flexibility, a change in volume of the composite cathode active material may be easily accepted (e.g., accommodated) during charging and discharging, and occurrence of cracks in the composite cathode active material may be suppressed or reduced. Because the carbonaceous material has high electronic conductivity, interfacial resistance between the composite cathode active material and the electrolyte decreases. Therefore, despite the introduction of the shell containing the carbonaceous material, internal resistance of a lithium battery may be maintained or reduced. Further, because the first metal oxide has voltage resistance, it may be possible to prevent or reduce the deterioration of the lithium transition metal oxide included in the core during charging and discharging at a high voltage. As a result, the high-temperature and/or high-voltage cycle characteristics of the lithium battery including the composite cathode active material may be improved. The shell may include, for example, one kind (chemical formula or composition) of first metal oxide or two or more kinds (chemical formulae or compositions) of different first metal oxides.

The metal M included in the first metal oxide may be at least one selected from aluminum (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), and selenium (Se). The first metal oxide may be, for example, at least one selected from $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2). Because such a first metal oxide is placed in a carbonaceous material matrix, the uniformity of the shell placed on the core may be improved, and voltage resistance of the composite cathode active material may be further improved. In some embodiments, the shell includes $Al_2O_x$ (0<x<3) as the first metal oxide.

The shell further includes at least one kind of second metal oxide represented by $M_aO_c$ (0<a≤3, 0<c≤4, when a is 1, 2, or 3, c is an integer). The second metal oxide includes the same metal as the first metal oxide, and the ratio c/a of c to a in the second metal oxide is greater than the ratio b/a of b to a in the first metal oxide. In other words, c/a > b/a. The second metal oxide may be selected from $Al_2O_3$, NbO, $NbO_2$, $Nb_2O_5$, MgO, $SC_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide is a reduction product of the second metal oxide. The first metal oxide may be obtained by reducing a part or all of the second metal oxide. Accordingly, the first metal oxide has a lower oxygen content and a lower metal oxidation number than the second metal oxide. For example, the shell includes $Al_2O_x$ (0<x<3) as the first metal oxide and $Al_2O_3$ as the second metal oxide.

In the composite cathode active material, for example, the carbonaceous material included in the shell may be chemically bonded to the transition metal of the lithium transition metal oxide included in the core through a chemical bond. A carbon atom (C) of the carbonaceous material in the shell may be chemically bonded to a transition metal (Me) of the lithium transition metal oxide utilizing an oxygen atom as an intermediate through C-O-Me bonding (for example, C-O-Co bonding). The carbonaceous material included in the shell may be chemically bonded to the lithium transition metal oxide included in the core to allow the core and the shell to be a composite. Therefore, the composite of the core and the shell may be distinguished from a simple physical mixture of carbonaceous material and lithium transition metal oxide (e.g., by the presence of a chemical bond or bonding interaction and/or the occurrence of a chemical reaction between the two components).

Further, the first metal oxide and carbonaceous material included in the shell are chemically bonded through a chemical bond. Here, the chemical bond may be covalent bonding, ionic bonding, or a combination thereof. The covalent bond may be, for example, a bond including at least one of an ester group, an ether group, a carbonyl group, an amide group, a carbonate anhydride group, or an acid anhydride group. The ionic bond may be, for example, a bond including a carboxylic acid ion, an ammonium ion, or an acyl cation group.

The thickness of the shell may be, for example, about 1 nm to about 5 μm, about 1 nm to about 1 μm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. When the thickness of the shell is within the above range, an increase in internal resistance of a lithium battery including the composite cathode active material may be suppressed or reduced.

The composite cathode active material may further include: a third metal doped on the core (e.g., doped in or on (over) the core near the outer surface of the core); or a third metal oxide applied on the core. The shell may be disposed on the doped third metal or the applied third metal oxide. For example, after a third metal is doped on the surface of the lithium transition metal oxide included in the core or a third metal oxide is applied on the surface of the lithium transition metal oxide, the shell may be placed (e.g., deposited) on or over the third metal and/or the third metal oxide. For example, the composite cathode active material may include a core; an intermediate layer disposed on the core; and a shell disposed on the intermediate layer, wherein the intermediate layer may include the third metal or the third metal oxide. The third metal may be at least one metal selected from Al, Zr, W, and Co, and the third metal oxide may be $Al_2O_3$, $Li_2O-ZrO_2$, $WO_2$, CoO, $Co_2O_3$, $Co_3O_4$, and/or the like.

The shell included in the composite cathode active material may include at least one selected from a composite including the first metal oxide, the second metal oxide and the carbonaceous material (for example, graphene) and a resulting product of milling of the composite, and the first metal oxide may be placed in a matrix of the carbonaceous material (for example, a graphene matrix). The shell may be prepared from a composite including the first metal oxide and the carbonaceous material. The composite further includes a second metal oxide in addition to the first metal oxide. The composite may include, for example, two or more kinds (chemical formulae or compositions) of first metal oxides. The composite may include, for example, two or more kinds (chemical formulae or compositions) of first metal oxides and two or more kinds (chemical formulae or compositions) of second metal oxides.

The content of the composite in the composite cathode active material may be 3 wt% or less, 2 wt% or less, 1 wt% or less, 0.5 wt% or less, or 0.2 wt% or less, based on the total weight of the composite cathode active material. The content of the composite may be about 0.01 wt% to about 3 wt%, about 0.01 wt% to about 1 wt%, about 0.01 wt% to about 0.7 wt%, about 0.1 wt% to about 0.5 wt%, about 0.01 wt% to about 0.2 wt%, about 0.01 wt% to about 0.1 wt%, or about 0.03 wt% to about 0.07 wt%, based on the total weight of the composite cathode active material. When the composite cathode active material includes the composite within this range, the cycle characteristics of the lithium battery including the composite cathode active material are further improved.

At least one selected from the first metal oxide and second metal oxide included in the composite may have an average particle diameter of about 1 nm to about 1 $\mu$m, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, about 7 nm to about 20 nm, or about 7 nm to about 15 nm. The first metal oxide and/or the second metal oxide may be more uniformly distributed in the carbonaceous material matrix (for example, graphene matrix) of the composite when the first metal oxide and/or the second metal oxide has a particle diameter within this nanometer range. Therefore, such a composite may be substantially uniformly applied on the core to form a shell. Further, the first metal oxide and/or the second metal oxide may be more evenly disposed (e.g., distributed) on the core when the first metal oxide and/or the second metal oxide has (have) a particle diameter within this nanometer range. Therefore, the first metal oxide and/or the second metal oxide may be substantially uniformly disposed on the core, thereby more effectively exhibiting voltage resistance characteristics.

The average particle diameter of the first metal oxide and the second metal oxide is measured by a measurement apparatus utilizing a laser diffraction method or a dynamic light scattering method. The average particle diameter thereof is measured utilizing a laser scattering particle size distribution meter (for example, LA-920 of Horiba Corporation), and is a value of the median diameter (D50) when the metal oxide particles are accumulated to 50% from small particles in volume conversion.

The uniformity deviation (e.g., deviations in the spatial distribution and/or concentration of a material, for example as determined by X-ray photoelectron spectroscopy (XPS)) of at least one selected from the first metal oxide and second metal oxide included in the composite may be 3% or less, 2% or less, or 1% or less. The uniformity may be obtained, for example, by XPS. Accordingly, at least one selected from the first metal oxide and second metal oxide included in the composite may have a uniformity deviation of 3% or less, 2% or less, or 1% or less, and may be uniformly distributed.

The carbonaceous material included in the composite may be or have a branched structure (e.g., a structure including one or more branching connections), and at least one selected from the first metal oxide and the second metal oxide may be distributed in the branched structure of the carbonaceous material. For example, the branched structure of the graphene includes a plurality of graphene particles contacting each other. Because the graphene has a branched structure, various suitable conductive paths may be provided (e.g., for electron transfer).

The carbonaceous material included in the composite may be or have a spherical structure, and at least one selected from the first metal oxide and the second metal oxide may be distributed in (e.g., throughout) the spherical structure. The spherical structure of the carbonaceous material may have a size of about 50 nm to 300 nm. A plurality of carbonaceous materials having a spherical structure may be provided. Since the carbonaceous material has a spherical structure, the composite may have a robust structure. For example, the carbonaceous material included in the composite may be or include a graphene. For example, the spherical structure of the graphene may have a size of about 50 nm to 300 nm. A plurality of graphenes (e.g., graphene particles) having a spherical structure may be provided. Because the graphene has a spherical structure, the composite structure may have a robust structure (e.g., may be physically stable).

The carbonaceous material included in the composite may be or have a spiral structure in which the plurality of spherical structures are connected to each other (e.g., to form a spiral), and at least one selected from the first metal oxide and the second metal oxide may be distributed in the spherical structures of the spiral structure. The spiral structure of the carbonaceous material may have a size of about 500 nm to 100 μm. Since the carbonaceous material has a spiral structure, the composite may have a robust structure. The carbonaceous material included in the composite may be or include a graphene. For example, the spiral structure of the graphene may have a size of about 500 nm to 100 μm. Because the graphene has a spiral structure, the composite may have a robust structure.

The carbonaceous material included in the composite may be or have a cluster structure in which the plurality of spherical structures are aggregated with each other, and at least one selected from the first metal oxide and the second metal oxide may be distributed in the spherical structures of the cluster structure. The cluster structure of the carbonaceous material may have a size of about 5 μm to about 1 mm or about 0.5 mm to 10 cm. Since the carbonaceous material has a cluster structure, the composite may have a robust structure. The carbonaceous material included in the composite may be or include a graphene. For example, the cluster structure of the graphene may have a size of about 5 μm to 1 mm or about 0.5 mm to 10 cm. Because the graphene has a cluster structure, the composite may have a robust structure. The size of the spherical structure, the spiral structure, or the cluster structure may be measured by Scanning Electron Microscope (SEM) or Transmission Electron Microscopy (TEM). The size of the spherical structure, the spiral structure, or the cluster structure may be an average diameter of the structures.

The composite may be or have a crumpled faceted-ball structure (e.g., a generally spherical or ball-like structure with a plurality of flat and/or crumpled faces or surfaces), and at least one selected from the first metal oxide and the second metal oxide may be distributed inside the structure and/or on the surface of the structure. Because the composite is such a faceted-ball structure, the composite may be easily applied on the irregular surface irregularities of the core.

The composite may be or have a planar structure, and at least one selected from the first metal oxide and the second metal oxide may be distributed inside the structure and/or on the surface of the structure. Because the composite has a two-dimensional planar structure, the composite may be easily applied on the irregular surface irregularities of the core.

The carbonaceous material included in the composite may extend from the first metal oxide by (over) a distance of 10 nm or less, and may include at least 1 to 20 carbonaceous material layers. For example, since a plurality of carbonaceous material layers are laminated, carbonaceous material having a total thickness of 12 nm or less may be placed on the first metal oxide. For example, the total thickness of the carbonaceous material may be about 0.6 nm to about 12 nm. The carbonaceous material included in the composite may be or include a graphene. For example, because a plurality of graphene layers are laminated, graphene having a total thickness of 12 nm or less may be placed on the first metal oxide. For example, the total thickness of the graphene may be about 0.6 nm to about 12 nm.

The core included in the composite cathode active material may include, for example, a lithium transition metal oxide represented by Formula 1:

Formula 1          $Li_aCo_xM_yO_{2-b}A_b$

where, in Formula 1 above,

$$1.0 \le a \le 1.2,\ 0 \le b \le 0.2,\ 0.9 \le x \le 1,\ 0 \le y \le 0.1,\ \text{and}\ x+y=1,$$

M is at least one selected from manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), and boron (B), and A is F, S, Cl, Br, or a combination thereof.

The core included in the composite cathode active material may include, for example, a lithium transition metal oxide represented by Formula 2:

Formula 2          $LiCoO_2$

A cathode according to another embodiment includes the above-described composite cathode active material. Because the cathode includes the above-described composite cathode active material, the cathode may provide improved cycle characteristics and thermal stability.

The cathode may be manufactured by the following example method, but manufacturing methods thereof are not limited to this method, and may be adjusted according to required conditions.

First, a cathode active material composition is prepared by mixing the above-described composite cathode active material, a conductive agent, a binder, and a solvent. The prepared cathode active material composition is directly applied and dried on an aluminum current collector to form a cathode plate provided with a cathode active material layer. In some embodiments, a film may be obtained by casting the cathode active material composition on a separate support and then separating the composition from the support is laminated on the aluminum current collector to form a cathode plate provided with a cathode active material layer.

As the conductive agent, carbon black, graphite fine particles, natural graphite, artificial graphite, acetylene black, Ketjen black, carbon fiber; carbon nanotubes; metal powder, metal fiber or metal tube (such as copper, nickel, aluminum, and/or silver); or conductive polymers (such as polyphenylene derivatives) may be utilized, but the present disclosure is not limited thereto. Any conductive agent may be utilized as long as it is utilized in the art.

As the binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, and/or a styrene butadiene rubber polymer may be utilized, but the present disclosure is not limited thereto. Any suitable binder in the art may be utilized. As the solvent, N-methylpyrrolidone (NMP), acetone, and/or water may be utilized, but the present disclosure is not limited thereto. Any solvent may be utilized as long as it is utilized in the art.

It is also possible to form pores in the electrode plate by further adding a plasticizer or a pore former to the cathode active material composition.

The contents of the composite cathode active material, conductive agent, binder, and solvent utilized in the cathode may be at levels commonly utilized in lithium batteries. Depending on the use and configuration of the lithium battery, one or more of the conductive agent, the binder, and the solvent may be omitted.

Further, the cathode may additionally include a general cathode active material other than the above-described composite cathode active material.

As the general cathode active material, any suitable lithium-containing metal oxide in the art may be utilized without limitation. For example, at least one of the composite oxides of lithium and a metal selected from cobalt, manganese, nickel, and a combination thereof may be utilized as the lithium-containing metal oxide. For example, the lithium-containing metal oxide may be represented by any one of the following formulae: $Li_aA_{1-b}B'_bD_2$ (where, $0.90 \leq a \leq 1$, and $0 \leq b \leq 0.5$); $Li_aE_{1-b}B'_bO_{2-c}D_c$ (where, $0.90 \leq a \leq 1$, $0 \leq b \leq 0.5$, and $0 \leq c \leq 0.05$); $LiE_{2-b}B'_bO_{4-c}D_c$ (where, $0 \leq b \leq 0.5$, and $0 \leq c \leq 0.05$); $Li_aNi_{1-b-c}Co_bB'_cD_\alpha$ (where, $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (where, $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-\alpha}F'_2$ (where, $0.90 \leq a \leq 1$, $0 \leq b \leq 0.5$, $0 \leq c \leq 0.05$, and $0 < \alpha < 2$); $Li_aNi_{1-b-c}Mn_bB'_cD_\alpha$ (where, $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_\alpha$ (where, $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where, $0.90 \leq a \leq 1$, $0 \leq b \leq 0.5$, $0 \leq c \leq 0.05$, and $0 < \alpha < 2$); $Li_aNi_bE_cG'_dO_2$ (where, $0.90 \leq a \leq 1$, $0 \leq b \leq 0.9$, $0 \leq c \leq 0.5$, and $0.001 \leq d \leq 0.1$); $Li_aNi_bCo_cMn_dG'_eO_2$ (where, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG'_bO_2$ (where, $0.90 \leq a \leq 1$, and $0.001 \leq b \leq 0.1$); $Li_aCoG'_bO_2$ (where, $0.90 \leq a \leq 1$, and $0.001 \leq b \leq 0.1$); $Li_aMnG'_bO_2$ (where, $0.90 \leq a \leq 1$, and $0.001 \leq b \leq 0.1$); $Li_aMn_2G'_bO_4$ (where, $0.90 \leq a \leq 1$, and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3 (0 \leq f \leq 2)$; $Li_{(3-f)}Fe_2(PO_4)_3 (0 \leq f \leq 2)$; and $LiFePO_4$.

In the Formulae representing the above-described compounds, A is nickel (Ni), cobalt (Co), manganese (Mn), or a combination thereof; B' is aluminum (Al), Ni, Co, Mn, chromium (Cr), iron (Fe), magnesium (Mg), strontium (Sr), vanadium (V), a rare earth element, or a combination thereof; D is oxygen (O), fluorine (F), sulfur (S), phosphorus (P), or a combination thereof; E is Co, Mn, or a combination thereof; F' is F, S, P, or a combination thereof; G' is Al, Cr, Mn, Fe, Mg, lanthanum (La), cerium (Ce), Sr, V, or a combination thereof; Q is titanium (Ti), molybdenum (Mo), Mn, or a combination thereof; I' is Cr, V, Fe, Sc, yttrium (Y), or a combination thereof; and J is V, Cr, Mn, Co, Ni, copper (Cu), or a combination thereof.

A coating layer may be provided on the surface of the above-described compound, and a coating layer compound or a mixture of the above-described compound and the coating layer compound may be utilized. The coating layer provided on the surface of the above-described compound may include a coating element compound (such as an oxide of a coating element, a hydroxide of a coating element, an oxyhydroxide of a coating element, an oxycarbonate of a coating element, or a hydroxycarbonate of a coating element). The compound constituting this coating layer may be amorphous or crystalline (or a mixture thereof). The coating element included in the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. The method of forming the coating layer is selected within a range that does not adversely affect the physical properties of the cathode active material. The coating method may be, for example, spray coating, dipping method, and/or the like. A detailed description of the coating method will not be provided because it may be well understood by those in the art.

A lithium battery according to another embodiment employs a cathode including the above-described composite cathode active material.

Because the lithium battery employs a cathode including the above-described composite cathode active material, improved cycle characteristics and thermal stability may be provided.

The lithium battery may be manufactured, for example, by example method, but the present disclosure is not necessarily limited to this method and is adjusted according to required conditions.

First, a cathode is prepared according to the above-described method of preparing a cathode.

Next, an anode may be prepared as follows. The anode may be prepared in substantially the same manner as the cathode, except that an anode active material is utilized instead of the composite cathode active material. Further, in an anode active material composition, a conductive agent, a binder, and a solvent, which are substantially the same as those in the cathode, may be utilized.

For example, an anode active material, a conductive agent, a binder, and a solvent may be mixed to prepare an anode active material composition, and this anode active material composition may be directly applied onto a copper current collector to prepare an anode plate. In some embodiments, a film obtained by casting the prepared anode active material composition on a separate support and then separating the composition from the support may be laminated on the copper current collector to prepare an anode plate.

Any suitable anode active material in the art may be utilized. For example, the anode active material may include at least one selected from a lithium metal, a metal alloyable with lithium, a transition metal oxide, a non-transition metal oxide, and a carbon-based material.

Examples of the metal alloyable with lithium may include silicon (Si), tin (Sn), aluminum (Al), germanium (Ge), lead (Pb), bismuth (Bi), antimony (Sb), an Si-Y' alloy (Y' is an alkali metal, an alkali-earth metal, a group 13 element, a group 14 element excluding Si, a transition metal, an rare earth element, or a combination thereof), and an Sn-Y" alloy (Y" is an alkali metal, an alkali-earth metal, a group 13 element, a group 14 element excluding Sn, a transition metal, an rare earth element, or a combination thereof). The elements Y ' and Y" may be, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or a combination thereof.

The transition metal oxide may be or include, for example, lithium titanium oxide, vanadium oxide, or lithium vanadium oxide.

The non-transition metal oxide may be or include, for example, $SnO_2$ or $SiO_x$ (0<x<2).

The carbon-based material may be or include, for example, crystalline carbon, amorphous carbon, or a mixture thereof. The crystalline carbon may be or include, for example, graphite (such as plate-like, flake-like, spherical or fibrous natural graphite and/or artificial graphite). The amorphous carbon may be, for example, soft carbon (low-temperature fired carbon), hard carbon, mesophase pitch carbide, and/or fired coke.

The contents of the anode active material, conductive agent, binder, and solvent utilized in the anode may be at levels commonly utilized in lithium batteries. Depending on the use and configuration of the lithium battery, one or more of the conductive agent, the binder, and the solvent may be omitted.

Next, a separator to be inserted between the cathode and the anode is prepared.

Any separator may be utilized as long as it is commonly utilized in lithium batteries. For example, any separator having low resistance to ion movement of an electrolyte and excellent or suitable electrolyte-moisturizing ability may be utilized. The separator may be a non-woven fabric or a woven fabric including at least one selected from fiberglass, polyester, Teflon, polyethylene, polypropylene, polytetrafluoroethylene (PTFE), and a combination thereof. For a lithium-ion battery, for example, a rollable separator including polyethylene, polypropylene, and/or the like is utilized, and for a lithium-ion polymer battery, a separator having excellent or suitable organic electrolyte impregnation ability is utilized.

The separator is manufactured by example method, but the present disclosure is not necessarily limited to this method and may be adjusted according to required conditions.

First, a polymer resin, a filler, and a solvent are mixed to prepare a separator composition. The separator composition may be directly applied and dried on an electrode to form a separator. In some embodiments, a film obtained by casting and drying the separator composition on a support and then separating the composition from the support may be laminated on the electrode to form a separator.

The polymer utilized for manufacturing the separator is not particularly limited, and any suitable polymer utilized for the binder of an electrode plate may be utilized. For example, as the polymer, a vinylidene fluoride/hexafluoropropylene copolymer, polyvinylidene fluoride (PVDF), polyacrylonitrile, polymethyl methacrylate, or a mixture thereof may be utilized.

Next, an electrolyte is prepared.

The electrolyte may be, for example, an organic electrolyte. The organic electrolyte may be prepared, for example, by dissolving a lithium salt in an organic solvent.

Any suitable organic solvent in the art may be utilized. The organic solvent may be or include, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

As the lithium salt, any suitable lithium salt in the art may be utilized. The lithium salt may be or include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (here, x and y are natural numbers), LiCl, Lil, or a mixture thereof.

In some embodiments, the electrolyte may be a solid electrolyte. The solid electrolyte may be or include, for example, boron oxide or lithium oxynitride, but is not limited thereto. Any suitable solid electrolyte in the art may be utilized. The solid electrolyte may be formed on the anode by a method such as sputtering, or a separate solid electrolyte sheet may be laminated on the anode.

As shown in the drawing, a lithium battery 1 includes a cathode 3, an anode 2, and a separator 4. The cathode 3, the anode 2, and the separator 4 are wound or folded to be accommodated in a battery case 5. An organic electrolyte is injected into the battery case 5, and the battery case 5 is sealed with a cap assembly 6 to complete the lithium battery 1. The battery case 5 is cylindrical, but is not necessarily limited to this shape, and, for example, the shape may be a square, a thin film (e.g., thin film pouch), and/or the like.

A pouch type or format lithium battery includes at least one cell structure. A separator is disposed between a cathode and an anode to form a cell structure. After the cell structure is stacked in a bi-cell structure, it is impregnated with an organic electrolytic solution, and is accommodated and sealed in a pouch to complete a pouch-type or kind lithium battery. A plurality of cell structures may be stacked to form a battery pack, and this battery pack may be utilized in all devices requiring high capacity and high output. For example, the battery pack is utilized in notebook computers, smart phones, electric vehicle, and/or the like.

Because the lithium battery has excellent or suitable lifetime characteristics and/or high-rate characteristics, it may be utilized in electric vehicles (EVs). For example, the lithium battery may be utilized in hybrid vehicles (such as plug-in hybrid electric vehicles (PHEVs)). Further, the lithium battery may be utilized in fields where a large amount of power storage is required. For example, the lithium battery may be utilized in electric bicycles, power tools, and/or the like.

A method of preparing a composite cathode active material includes: providing a lithium transition metal oxide; providing a composite; and mechanically milling the lithium transition metal oxide and the composite, wherein the composite includes at least one first metal oxide represented by Formula $M_aO_b$ (0<a≤3, 0<b<4, provided that when a is 1, 2, or 3, b is not an integer), and a carbonaceous material, the first metal oxide is disposed within a carbonaceous material matrix (e.g., a matrix of the carbonaceous material), and M is at least one metal selected from Groups 2 to 13, Group 15, and Group 16 of the Periodic Table of Elements.

A lithium transition metal oxide is provided. The lithium transition metal oxide may be, for example, the above-described compound represented by any one of Formulas 1 and 2.

The providing the composite may include, for example, supplying a reaction gas including a carbon source gas to a structure including a metal oxide and performing heat treatment.

The providing the composite may include, for example, supplying a reaction gas including a carbon source gas to a second metal oxide represented by Formula $M_aO_c$ (0<a≤3, 0<c≤4, provided that when a is 1, 2, or 3, c is an integer) and performing heat treatment, and M is at least one metal selected from Groups 2 to 13, Group 15, and Group 16 of the Periodic Table of Elements.

The carbon source gas may be a compound represented by Formula 4, or may be a mixed gas of the compound represented by Formula 4 and at least one selected from a compound represented by Formula 5 and an oxygen-containing gas represented by Formula 6.

**Formula 4**         $C_nH_{(2n+2-a)}[OH]_a$

in Formula 4, n may be 1 to 20 and a may be 0 or 1;

**Formula 5**         $C_nH_{2n}$

in Formula 5, n may be 2 to 6; and

**Formula 6**         $C_xH_yO_z$

in Formula 6, x may be an integer of 0 or 1 to 20, y may be an integer of 0 or 1 to 20, and z may be 1 or 2.

For example, the compound represented by Formula 4 and the compound represented by Formula 5 includes at least one selected from methane, ethylene, propylene, methanol, ethanol, and propanol. For example, the oxygen-containing gas represented by Formula 6 may be or include carbon dioxide ($CO_2$), carbon monoxide (CO), water vapor ($H_2O$), or a mixture thereof.

After supplying a reaction gas including a carbon source gas to a second metal oxide represented by $M_aO_c$ (0<a≤3, 0<c≤4, provided that when a is 1, 2, or 3, c is an integer) and performing heat treatment, a cooling process utilizing at least one inert gas selected from nitrogen, helium, and argon may be further performed. The cooling process refers to a process of adjusting temperature to room temperature (about 20 °C to about 25 ° C). The carbon source gas may include at least one inert gas selected from nitrogen, helium, and argon.

In the method of preparing the composite, the process of growing carbonaceous material (for example, graphene) according to a gas phase reaction may be performed under various suitable conditions.

According to a first condition, for example, first, methane is supplied to a reactor provided with the second metal oxide represented by $M_aO_c$ (0<a≤3, 0<c≤4, provided that when a is 1, 2, or 3, c is an integer), and is heated to a heat treatment temperature (T). For example, the heating time up to the heat treatment temperature (T) may be about 10 minutes to about 4 hours, and the heat treatment temperature (T) may be about 700 ° C to about 1100 ° C. Heat treatment is performed at the heat treatment temperature (T) for a set or predetermined reaction time. The reaction time may be, for example, about 4 hours to about 8 hours. The resultant product of heat treatment is cooled to room temperature to prepare a composite. The time taken to perform the process of cooling the resultant product from the heat treatment temperature to room temperature may be, for example, about 1 hour to 5 hours.

According to a second condition, for example, first, hydrogen may be supplied to a reactor provided with the second metal oxide represented by $M_aO_c$ (0<a≤3, 0<c≤4, provided that when a is 1, 2, or 3, c is an integer), and is heated to the heat treatment temperature (T). For example, the heating time up to the heat treatment temperature (T) may be about 10 minutes to about 4 hours, and the heat treatment temperature (T) may be about 700 ° C to about 1100 ° C. After heat treatment is performed at the heat treatment temperature (T) for a set or predetermined reaction time, methane gas is supplied, and heat treatment is performed for residual reaction time. The reaction time may be, for example, about 4 hours to about 8 hours. The resultant product of heat treatment is cooled to room temperature to prepare a composite. For example, nitrogen is supplied during the process of cooling the resultant product. The time taken to perform the process of cooling the resultant product from the heat treatment temperature to room temperature may be, for example, about 1 hour to 5 hours.

According to a third condition, for example, first, hydrogen is supplied to a reactor provided with the second metal oxide represented by $M_aO_c$ (0<a≤3, 0<c≤4, provided that when a is 1, 2, or 3, c is an integer), and is heated to the heat treatment temperature (T). For example, the heating time up to the heat treatment temperature (T) may be about 10 minutes to about 4 hours, and the heat treatment temperature (T) may be about 700 ° C to about 1100 ° C. After heat treatment is performed at the heat treatment temperature (T) for a set or predetermined reaction time, a mixed gas of methane and hydrogen is supplied, and heat treatment is performed for residual reaction time. The reaction time may be, for example, about 4 hours to about 8 hours. The resultant product of heat treatment is cooled to room temperature to prepare a composite. For example, nitrogen may be supplied during the process of cooling the resultant product. The time taken to perform the process of cooling the resultant product from the heat treatment temperature to room temperature may be, for example, about 1 hour to 5 hours.

In the process of preparing the composite, when the carbon source gas includes water vapor, a composite having excellent or suitable conductivity may be obtained. The content of water vapor in the gas mixture is not limited, and may be, for example, about 0.01 vol% to about 10 vol% based on 100 vol% of the total carbon source gas. The carbon source gas may be, for example, methane; a mixed gas containing methane and an inert gas; or a mixed gas containing methane and an oxygen-containing gas.

The carbon source gas may be, for example, methane; a mixed gas of methane and carbon dioxide; or a mixed gas of methane, carbon dioxide and water vapor. The molar ratio of methane and carbon dioxide in the mixed gas of methane and carbon dioxide may be about 1: 0.20 to about 1:0.50, about 1: 0.25 to about 1:0.45, or about 1:0.30 to about 1: 0.40. The molar ratio of methane and carbon dioxide (e.g., a sum of methane and carbon dioxide) and (e.g., to) water vapor in the mixed gas of methane and carbon dioxide and water vapor may be about 1:0.20 to 0.50: 0.01 to 1.45, about 1: 0.25 to 0.45: 0.10 to 1.35, or about 1: 0.30 to 0.40: 0.50 to 1.0.

The carbon source gas may be, for example, carbon monoxide or carbon dioxide. The carbon source gas may be, for example, a mixed gas of methane and nitrogen. The molar ratio of methane and nitrogen in the mixed gas of methane and nitrogen may be about 1: 0.20 to about 1: 0.50, about 1: 0.25 to about 1: 0.45, or about 1: 0.30 to about 1: 0.40. In some examples, the carbon source gas may not include an inert gas (such as nitrogen).

The heat treatment pressure may be selected in consideration of the heat treatment temperature, the composition of the gas mixture, and the desired or suitable coating amount of carbon. The heat treatment pressure may be controlled or selected by adjusting the amount of the inflowing gas mixture and the amount of the outflowing gas mixture. The heat treatment pressure may be, for example, 0.5 atm or more, 1 atm or more, 2 atm or more, 3 atm or more, 4 atm or more, or 5 atm or more.

The heat treatment time may be selected in consideration of the heat treatment temperature, the heat treatment pressure, the composition of the gas mixture, and/or the desired or suitable coating amount of carbon. For example, the reaction time at the heat treatment temperature may be, for example, about 10 minutes to about 100 hours, about 30 minutes to about 90 hours, or about 50 minutes to about 40 hours. For example, as the heat treatment time increases, the amount of carbon (e.g., graphene) deposited increases, and thus, the electrical properties of the composite may be improved. However, this tendency may not necessarily be proportional to time. For example, after a set or predetermined period of time, deposition of carbon (e.g., graphene) may no longer occur, or the deposition rate of carbon (e.g., graphene) may be lowered.

At least one selected from a second metal oxide represented by $M_aO_c$ ($0<a\leq3$, $0<c\leq4$, when a is 1, 2, or 3, c is an integer) and a reduction product thereof (which is a first metal oxide represented by $M_aO_b$ ($0<a\leq3$, $0<b<4$, when a is 1, 2, or 3, and b is not an integer)) is subjected to substantially uniform carbonaceous material coating (for example, graphene coating) even at relatively low temperature through the gas phase reaction of the above-described carbon source gas to obtain a composite.

The composite includes a carbonaceous material matrix (for example, graphene matrix) having at least one structure selected from a spherical structure, a spiral structure in which a plurality of spherical structures are connected to each other, and a cluster structure in which a plurality of spherical structures are aggregated with each other, and at least one selected from a first metal oxide represented by $M_aO_b$ ($0<a\leq3$, $0<b<4$, when a is 1, 2, or 3, and b is not an integer) and a second metal oxide represented by $M_aO_c$ ($0<a\leq3$, $0<c\leq4$, when a is 1, 2, or 3, c is an integer), which are placed in the carbonaceous material matrix for example graphene matrix.

Next, the lithium transition metal oxide and the composite are mechanically milled. A Nobilta mixer may be utilized in the milling. The number of revolutions of the mixer during the milling may be, for example, about 1000 rpm to about 2500 rpm. When the milling speed is less than 1000 rpm, the shear force applied to the lithium transition metal oxide and the composite is weak, so it may be difficult for the lithium transition metal oxide and the composite to form a chemical bond. When the milling speed is too high, the composite may not be substantially uniformly applied on (e.g. over particles of) the lithium transition metal oxide because a formation of composite is performed in an excessively short time, so it may be difficult to form a substantially uniform and substantially continuous shell (e.g., a shell including a composite of the at least first metal oxide and the carbonaceous material). The milling time may be, for example, about 5 minutes to about 100 minutes, about 5 minutes to about 60 minutes, or about 5 minutes to about 30 minutes. When the milling time is too short, the composite may not be substantially uniformly applied on (e.g. just over particles of) the lithium transition metal oxide, so it may be difficult to form a substantially uniform and substantially continuous shell (e.g., a shell including a composite of the at least first metal oxide and the carbonaceous material). When the milling time is too long, production efficiency may be lowered. The content of the composite may be 3 wt% or less, 2 wt% or less, or 1 wt% or less, based on the total weight of the lithium transition metal oxide and the composite. For example, the content of the composite may be about 0.01 parts by weight to about 3 parts by weight, about 0.1 parts by weight to about 3 parts by weight, about 0.1 parts by weight to about 2 parts by weight, or about 0.1 parts by weight to about 1 part by weight based on 100 parts by weight of a mixture of the lithium transition metal oxide and the composite.

The average particle diameter (D50) of the composite utilized in the mechanical milling of the lithium transition metal oxide and the composite is, for example, about 1 $\mu$m to about 20 $\mu$m, about 3 $\mu$m to about 15 $\mu$m, or about 5 $\mu$m to about 10 $\mu$m.

The present disclosure will be described in more detail through the following examples and comparative examples. However, these examples are only for illustrative purposes, and the scope of the present disclosure is not limited thereto.

**Preparation of composite**

**Preparation Example 1: Al₂O₃@Gr composite**

$Al_2O_3$ particles (average particle diameter: about 20 nm) were introduced into a reactor, and then the temperature in the reactor was increased to 1000 °C under the condition that $CH_4$ was supplied into the reactor at about 300 sccm and about 1 atm for about 30 minutes.

Subsequently, heat treatment was performed while maintaining the temperature at 1000 °C for 7 hours. Subsequently, the temperature in the reactor was adjusted to room temperature (about 20 °C to about 25 °C) to obtain a composite in which $Al_2O_3$ particles and $Al_2O_z$ ($0<z<3$) particles as a reduction product thereof are embedded in graphene.

The content of alumina included in the composite was 60 wt%.

**Comparative Preparation Example 1: SiO₂@Gr composite**

$SiO_2$ particles (average particle diameter: about 15 nm) were introduced into a reactor, and then the temperature in the reactor was increased to 1000 °C under the condition that $CH_4$ was supplied into the reactor at about 300 sccm and about 1 atm for about 30 minutes.

Subsequently, heat treatment was performed while maintaining the temperature at 1000 ° C for 7 hours. Subsequently, the temperature in the reactor was adjusted to room temperature (about 20 ° C to about 25 ° C) to obtain a composite in which $SiO_2$ particles and $SiO_y$ $(0<y<2)$ particles as a reduction product thereof are embedded in graphene.

**Preparation of composite cathode active material**

**Example 1: 0.25 wt% of $Al_2O_3$@Gr composite-coated LCO (0.15 wt% of alumina)**

$LiCoO_2$ (hereinafter, referred to as LCO) and the composite prepared in Preparation Example 1 were milled at a rotation speed (first milling condition) of about 1000 rpm to about 2500 rpm for about 5 minutes to about 30 minutes utilizing a Nobilta mixer (Hosokawa, Japan) to obtain a composite cathode active material.
The mixing weight ratio of LCO and the composite prepared in Preparation Example 1 was 99.75:0.25.

**Example 2: 0.25 wt% $Al_2O_3$@Gr composite-coated LCO (0.15 wt% of alumina)**

A composite cathode active material was prepared in substantially the same manner as in Example 1, except that the rotation speed within the range of Example 1 was changed differently from Example 1 (second milling condition).

**Example 3: 0.25 wt% $Al_2O_3$@Gr composite-coated LCO (0.15 wt% of alumina)**

A composite cathode active material was prepared in substantially the same manner as in Example 1, except that the rotation speed within the range of Example 1 was changed differently from Examples 1 and 2 (third milling condition).

**Comparative Example 1: bare LCO**

LCO was utilized (e.g., as-is) as a cathode active material.

**Comparative Example 2: 0.25 wt% $SiO_2$@Gr composite-coated LCO (0.15 wt% of silica)**

A composite cathode active material was prepared by performing milling in substantially the same manner as in Example 1, except that $LiCoO_2$ (hereinafter, referred to as LCO) and the composite prepared in Comparative Preparation Example 1 were utilized.
The mixing weight ratio of LCO and the composite prepared in Comparative Preparation Example 1 was 99.75:0.25.

**Comparative Example 3: 0.25 wt% $SiO_2$@Gr composite-coated LCO (0.15 wt% of silica)**

A composite cathode active material was prepared in substantially the same manner as in Example 2, except that LCO and the composite prepared in Comparative Preparation Example 1 were utilized.

**Comparative Example 4: 0.25 wt% $SiO_2$@Gr composite-coated LCO (0.15 wt% of silica)**

A composite cathode active material was prepared in substantially the same manner as in Example 3, except that LCO and the composite prepared in Comparative Preparation Example 1 were utilized.

**Manufacture of lithium battery (half-cell)**

**Example 4**

**Manufacture of cathode**

A mixture obtained by mixing the composite cathode active material prepared in Example 1, a carbon conductive agent (Denka Black), and polyvinylidene fluoride (PVdF) at a weight ratio of 92:4:4 was mixed with N-methylpyrrolidone (NMP) in an agate mortar to prepare a slurry.
The slurry was applied on an aluminum current collector having a thickness of 15 μm by bar coating, dried at room temperature, further dried in vacuum, and rolled and punched to obtain a cathode plate having a thickness of 55 μ m.

**Manufacture of coin cell**

Each coin cell was manufactured utilizing the obtained cathode plate, where lithium metal was utilized as a counter electrode and a solution in which a PTFE separator and 1.3 M $LiPF_6$ are dissolved in EC (ethylene carbonate) + EMC (ethyl methyl carbonate) + DMC (dimethyl carbonate) (3:4:3 by volume) was utilized as an electrolyte.

**Examples 5 and 6**

Coin cells were manufactured in substantially the same manner in Example 4, except that the composite cathode active materials prepared in Examples 2 and 3 were respectively utilized instead of the composite cathode active material prepared in Example 1.

**Comparative Examples 5 to 8**

Coin cells were manufactured in substantially the same manner in Example 4, except that the composite cathode active materials prepared in Comparative Examples 1 to 4 were respectively utilized instead of the composite cathode active material prepared in Example 1.

**Evaluation Example 1: XPS spectrum evaluation**

In the process of preparing the composite prepared in Preparation Example 1, XPS spectra were measured utilizing a Quantum 2000 (Physical Electronics) over time. Before heating, XPS spectra of C 1s orbitals and Al 2p orbitals of samples were measured after 1 minute, after 5 minutes, after 30 minutes, after 1 hour, and after 4 hours, respectively. At the initial heating, only the peak for the Al 2p orbital appeared, and the peak for the C 1s orbital did not appear. After 30 minutes, the peak for the C 1s orbital appeared clearly, and the size of the peak for the Al 2p orbital was significantly reduced.

After 30 minutes, near 284.5 eV, peaks for C-C bonds due to graphene growth and C 1s orbitals due to C=C bonds appeared clearly.

As reaction time elapsed, the oxidation number of aluminum decreased, and thus the peak position of the Al 2p orbital was shifted toward a lower binding energy (eV).

Accordingly, it was found that, as the reaction proceeded, graphene was grown on $Al_2O_3$ particles, and $Al_2O_x$ (0<x<3), which is a reduction product of $Al_2O_3$, was produced.

The average contents of carbon and aluminum were measured through XPS analysis results in 10 regions of the composite sample prepared in Preparation Example 1. With respect to the measurement results, a deviation of the aluminum content for each region was calculated. The deviation of the aluminum content was expressed as a percentage of the average value, and this percentage was referred to as uniformity. The percentage of the average value of the deviation of the aluminum content, that is, the uniformity of the aluminum content was 1%. Therefore, it was found that alumina was uniformly distributed in the composite prepared in Preparation Example 1.

**Evaluation Example 2: SEM, HR-TEM and SEM-EDAX analysis**

The composite prepared in Preparation Example 1, the composite cathode active material prepared in Example 3, and the bare LCO of Comparative Example 1 were subjected to scanning electron microscope analysis, high-resolution transmission electron microscope analysis, and EDX analysis. For SEM-EDX analysis, a FEI's Titan 80-300 was utilized.

The composite prepared in Preparation Example 1 shows a structure in which $Al_2O_3$ particles and $Al_2O_z$ (0<z<3) particles, which are reduction products thereof, are embedded in graphene. It was found that the graphene layer was disposed on the outside of one or more particles selected from $Al_2O_3$ particles and $Al_2O_z$ (0<z<3). The one or more particles selected from $Al_2O_3$ particles and $Al_2O_z$ (0<z<3) were uniformly distributed. At least one of $Al_2O_3$ particles and $Al_2O_z$ (0<z<3) has a particle diameter of about 20 nm. The particle diameter of the composite prepared in Preparation Example 1 was about 100 nm to about 200 nm.

It was found that in the composite cathode active material prepared in Example 1, a shell formed by a composite including graphene was disposed on the LCO core.

SEM-EDAX analysis for the bare LCO of Comparative Example 1 and the composite cathode active material prepared in Example 1 was carried out.

Aluminum (Al) was not observed on the surface of the bare LCO composite cathode active material of Comparative Example 1. In contrast, aluminum (Al) distributed on the surface of the composite cathode active material of Example 1 was confirmed. Therefore, it was confirmed that in the composite cathode active material of Example 3, the composite prepared in Preparation Example 1 was uniformly applied on the LCO core to form a shell.

**Evaluation Example 3: Evaluation of charge and discharge characteristics at room temperature**

Each of the lithium batteries manufactured in Examples 4 to 6 and Comparative Examples 5 to 7 was charged with a constant current of 0.1C rate at 25° C until a voltage reached 4.55 V (vs. Li), and was then cut-off at a current of 0.05C rate while maintaining the voltage at 4.55 V in a constant voltage mode. Subsequently, each of the lithium batteries was discharged at a constant current of 0.1C rate until the voltage reached 3.0 V(vs. Li) (formation cycle).

Each of the lithium batteries having undergone the formation cycle was charged with a constant current of 0.2C rate at 25° C until a voltage reached 4.55 V (vs. Li), and was then cut-off at a current of 0.05C rate while maintaining the voltage at 4.55 V in a constant voltage mode. Subsequently, each of the lithium batteries was discharged at a constant current of 0.2C rate until the voltage reached 3.0 V(vs. Li) (1st cycle).

Each of the lithium batteries having undergone the 1st cycle was charged with a constant current of 1C rate at 25° C until a voltage reached 4.55 V (vs. Li), and was then cut-off at a current of 0.05C rate while maintaining the voltage at 4.55 V in a constant voltage mode. Subsequently, each of the lithium batteries was discharged at a constant current of 1C rate until the voltage reached 3.0 V(vs. Li) (2nd cycle). This cycle was repeated (50 repetitions) until the 50th cycle under substantially the same conditions.

In all charge/discharge cycles, a 10-minute stop time was provided after one charge/discharge cycle.

Some of the results of the charging and discharging experiments at room temperature are shown in Table 1. The capacity retention rate in the 50th cycle is defined by Equation 1.

**Equation 1** Capacity retention rate[%] = [discharge capacity in 50th cycle / discharge capacity in 1st cycle] $\times$ 100

Equation 1

**Table 1**

| | Capacity retention rate at room temperature [%] |
|---|---|
| Example 4: $Al_2O_3$@Gr composite 0.25 wt% coating / LCO core First milling condition | 88.95 |
| Example 5: $Al_2O_3$@Gr composite 0.25 wt% coating / LCO core Second milling condition | 63.39 |
| Example 6: $Al_2O_3$@Gr composite 0.25 wt% coating / LCO core | 85.41 |
| Third milling condition | |
| Comparative Example 5: Bare LCO (no coating) | 37.07 |
| Comparative Example 6: $SiO_2$@Gr composite 0.25 wt% coating / LCO core First milling condition | 45.00 |
| Comparative Example 7: $SiO_2$@Gr composite 0.25 wt% coating / LCO core Second milling condition | 35.82 |

As shown in Table 1, in the lithium batteries of Examples 4 to 6, room temperature lifetime characteristics were improved compared to the lithium batteries of Comparative Examples 5 to 7.

In some embodiments, the lithium batteries of Comparative Examples 6 and 7 have similar room temperature lifetime characteristics to the lithium battery of Comparative Example 5 including the cathode active material not coated with the composite.

**Evaluation Example 4: Evaluation of high-temperature and high-voltage charge and discharge characteristics**

Each of the lithium batteries manufactured in Examples 4 to 6 and Comparative Examples 5 to 7 was charged with a constant current of 0.1C rate at 45° C until a voltage reached 4.58 V (vs. Li), and was then cut-off at a current of 0.05C rate while maintaining the voltage at 4.58 V in a constant voltage mode. Subsequently, each of the lithium batteries was discharged at a constant current of 0.1C rate until the voltage reached 3.0 V(vs. Li) (formation cycle).

Each of the lithium batteries having undergone the formation cycle was charged with a constant current of 0.2C rate at 45° C until a voltage reached 4.58 V (vs. Li), and was then cut-off at a current of 0.05C rate while maintaining the voltage at 4.58 V in a constant voltage mode. Subsequently, each of the lithium batteries was discharged at a constant current of 0.2C rate until the voltage reached 3.0 V(vs. Li) (1st cycle).

Each of the lithium batteries having undergone the 1st cycle was charged with a constant current of 1C rate at 45° C until a voltage reached 4.58 V (vs. Li), and was then cut-off at a current of 0.05C rate while maintaining the voltage at 4.58 V in a constant voltage mode. Subsequently, each of the lithium batteries was discharged at a constant current of 1C rate until the voltage reached 3.0 V(vs. Li) (2nd cycle). This cycle was repeated (50 repetitions) until the 50th cycle under substantially the same conditions.

In all charge/discharge cycles, a 10-minute stop time was provided after one charge/discharge cycle.

Some of the results of the charging and discharging experiments at high temperature are shown in Table 2. The capacity retention rate in the 50th cycle is defined by Equation 1.

**Equation 1** Capacity retention rate[%] = [discharge capacity in 50th cycle / discharge capacity in 1st cycle] $\times$ 100

Equation 1

**Table 2**

| | Capacity retention rate at high temperature [%] |
|---|---|
| Example 4: $Al_2O_3$@Gr composite 0.25 wt% coating / LCO core First milling condition | 70.43 |
| Example 5: $Al_2O_3$@Gr composite 0.25 wt% coating / LCO core Second milling condition | 72.66 |
| Example 6: $Al_2O_3$@Gr composite 0.25 wt% coating / LCO core Third milling condition | 67.82 |
| Comparative Example 5: Bare LCO (no coating) | 65.46 |
| Comparative Example 6: $SiO_2$@Gr composite 0.25 wt% coating / LCO core First milling condition | 8.21 |
| Comparative Example 7: $SiO_2$@Gr composite 0.25 wt% coating / LCO core Second milling condition | 8.68 |

As shown in Table 2, in the lithium batteries of Examples 4 to 6, high-temperature lifetime characteristics significantly increased compared to the lithium batteries of Comparative Examples 5 to 7.

In some embodiments, in the lithium batteries of Comparative Examples 6 and 7, high temperature lifetime characteristics were further deteriorated compared to the lithium battery of Comparative Example 5 including the cathode active material not coated with the composite.

According to an aspect, because a composite cathode active material includes a shell including a first metal oxide and carbonaceous material, cycle characteristics and high-temperature stability of a lithium battery are improved.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the disclosure as defined by claims.

**Claims**

1. A composite cathode active material comprising:

   a core comprising a lithium transition metal oxide; and
   a shell on the core, the shell being conformal to a surface of the core,
   wherein the shell comprises at least one first metal oxide represented by Formula $M_aO_b$ ($0<a\leq3$, $0<b<4$, when a is 1, 2, or 3, b is not an integer), a second metal oxide represented by $M_aO_c$ ($0<a\leq3$, $0<c\leq4$, provided that when a is 1, 2, or 3, c is an integer), and a carbonaceous material,
   the first metal oxide is within a matrix of the carbonaceous material,
   M is at least one metal selected from Groups 2 to 13, Group 15, and Group 16 of the Periodic Table of Elements,
   the second metal oxide comprises the same metal as the first metal oxide, and
   a ratio c/a of c to a in the second metal oxide is greater than a ratio b/a of b to a in the first metal oxide.

2. The composite cathode active material of claim 1, wherein M is at least one selected from Al, Nb, Mg, Sc, Ti, Zr, V, W, Mn, Fe, Co, Pd, Cu, Ag, Zn, Sb, and Se.

3. The composite cathode active material of claims 1 or 2, wherein the first metal oxide is at least one selected from $Al_2O_z$ ($0<z<3$), $NbO_x$ ($0<x<2.5$), $MgO_x$ ($0<x<1$), $Sc_2O_z$ ($0<z<3$), $TiO_y$ ($0<y<2$), $ZrO_y$ ($0<y<2$), $V_2O_z$ ($0<z<3$), $WO_y$ ($0<y<2$), $MnO_y$ ($0<y<2$), $Fe_2O_z$ ($0<z<3$), $Co_3O_w$ ($0<w<4$), $PdO_x$ ($0<x<1$), $CuO_x$ ($0<x<1$), $AgO_x$ ($0<x<1$), $ZnO_x$ ($0<x<1$), $Sb_2O_z$ ($0<z<3$), and $SeO_y$ ($0<y<2$).

4. The composite cathode active material of any one of claims 1 to 3, wherein the second metal oxide is selected from $Al_2O_3$, NbO, $NbO_2$, $Nb_2O_5$, MgO, $SC_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$.

5. The composite cathode active material of any one of claims 1 to 4, wherein the first metal oxide is a reduction product of the second metal oxide.

6. The composite cathode active material of any one of claims 1 to 5, wherein:

   (i) the shell has a thickness of about 1 nm to about 5 $\mu$m, and/or
   (ii) the composite cathode active material, further comprises a third metal doped on the core; or a third metal oxide applied on the core,
   wherein the shell is on the third metal oxide, and
   the third metal oxide is an oxide of at least one selected from Al, Zr, W, and Co.

7. The composite cathode active material of claim 1, wherein the shell comprises at least one selected from a composite comprising the first metal oxide, the second metal oxide and the carbonaceous material, and a product of milling of the composite.

8. The composite cathode active material of claim 7, wherein a content of the composite is 3 wt% or less based on a total weight of the composite cathode active material.

9. The composite cathode active material of claim 7 or claim 8, wherein at least one selected from the first metal oxide and the second metal oxide has an average particle diameter of about 1 nm to about 1 $\mu$m.

10. The composite cathode active material of claim 9, wherein at least one selected from the first metal oxide and the second metal oxide has a uniformity deviation of 3% or less.

11. The composite cathode active material of any one of claims 7 to 10, wherein the carbonaceous material has a branched structure,

the first metal oxide is distributed in the branched structure, and
the branched structure comprises a plurality of carbonaceous material particles contacting each other.

12. The composite cathode active material of any one of claims 7 to 10, wherein the carbonaceous material has at least one structure selected from a spherical structure, a spiral structure in which spherical structures are connected to each other, and a cluster structure in which spherical structures are aggregated with each other,

the first metal oxide is distributed in the spherical structure or the spherical structures, the spherical structure has a size of about 50 nm to about 300 nm, the spiral structure has a size of about 500 nm to about 100 $\mu$m, and the cluster structure has a size of about 0.5 mm to about 10 cm,
the composite has a crumpled faceted-ball structure or a planar structure, and at least one selected from the first metal oxide and the second metal oxide is distributed inside the crumpled faceted-ball structure or the planar structure or on a surface of the crumpled faceted-ball structure or the planar structure, and
the carbonaceous material extends from the first metal oxide by a distance of 10 nm or less, includes at least 1 to 20 carbonaceous material layers, and has a total thickness of about 0.6 nm to about 12 nm.

13. The composite cathode active material of any one of claims 1 to 12, wherein the lithium transition metal oxide is represented by Formula 1 or 2:

$$\text{Formula 1} \qquad Li_aCo_xM_yO_{2-b}A_b$$

wherein in Formula 1,

$$1.0 \leq a \leq 1.2,\ 0 \leq b \leq 0.2,\ 0.9 \leq x \leq 1,\ 0 \leq y \leq 0.1,\ \text{and}\ x+y=1,$$

and
M is at least one selected from manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), and boron (B), and A is F, S, Cl, Br, or a combination thereof; and

$$\text{Formula 2} \qquad LiCoO_2.$$

14. A cathode comprising the composite cathode active material of any one of claims 1 to 13.

15. A lithium battery comprising the cathode of claim 14.

**Patentansprüche**

1. Aktives Kathodenverbundmaterial, umfassend:

einen Kern, der ein Lithium-Übergangsmetalloxid umfasst; und
eine Hülle um den Kern, wobei die Hülle an eine Oberfläche des Kerns angepasst ist,
wobei die Hülle mindestens ein erstes Metalloxid, durch Formel $M_aO_b$ (0< a$\leq$3, 0<b<4, wobei a gleich 1, 2 oder 3 ist, b keine ganze Zahl ist) dargestellt, ein zweites Metalloxid, durch $M_aO_c$ (0< a$\leq$3, 0<c$\leq$4, vorausgesetzt, dass c eine ganze Zahl ist, wenn a gleich 1, 2 oder 3) dargestellt, und ein kohlenstoffhaltiges Material umfasst,
das erste Metalloxid sich in einer Matrix des kohlenstoffhaltigen Materials befindet,
M mindestens ein Metall ist, ausgewählt aus den Gruppen 2 bis 13, Gruppe 15 und Gruppe 16 des Periodensystems der Elemente,
das zweite Metalloxid besteht das gleiche Metall wie das erste Metalloxid umfasst, und
ein Verhältnis c/a von c zu a im zweiten Metalloxid größer als ein Verhältnis b/a von b zu a im ersten Metalloxid ist.

2. Aktives Kathodenverbundmaterial nach Anspruch 1, wobei M mindestens eines, ausgewählt aus Al, Nb, Mg, Sc, Ti, Zr, V, W, Mn, Fe, Co, Pd, Cu, Ag, Zn, Sb und Se ist.

3. Aktives Kathodenverbundmaterial nach Anspruch 1 oder 2, wobei das erste Metalloxid mindestens eines, ausgewählt

aus $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3) und $SeO_y$ (0<y<2) ist.

4. Aktives Kathodenverbundmaterial nach einem der Ansprüche 1 bis 3, wobei das zweite Metalloxid ausgewählt ist aus $Al_2O_3$, NbO, $NbO_2$, $Nb_2O_5$, MgO, $SC_2O_3$, $TiO_2$, $ZrO_2$, $V_2O_3$, $WO_2$, $MnO_2$, $Fe_2O_5$, $CO_3O_4$, PdO, CuO, AgO, ZnO, $Sb_2O_3$ und $SeO_2$.

5. Aktives Kathodenverbundmaterial nach einem der Ansprüche 1 bis 4, wobei das erste Metalloxid ein Reduktionsprodukt des zweiten Metalloxids ist.

6. Aktives Kathodenverbundmaterial nach einem der Ansprüche 1 bis 5, wobei:

   (i) die Hülle eine Dicke von etwa 1 nm bis etwa 5 $\mu$m aufweist, und/oder
   (ii) das aktive Kathodenverbundmaterial ferner ein drittes Metall, das auf dem Kern dotiert ist, oder ein drittes Metalloxid, das auf dem Kern aufgebracht ist, umfasst,
   wobei die Hülle auf dem dritten Metalloxid liegt, und
   das dritte Metalloxid ist ein Oxid von mindestens einem, ausgewählt aus Al, Zr, W und Co ist.

7. Aktives Kathodenverbundmaterial nach Anspruch 1, wobei die Hülle mindestens eines, ausgewählt aus einem Verbundmaterial, das das erste Metalloxid, das zweite Metalloxid und das kohlenstoffhaltige Material umfasst, und einem Produkt aus einem Zerkleinern des Verbundmaterials umfasst.

8. Aktives Kathodenverbundmaterial nach Anspruch 7, wobei ein Anteil des Verbundmaterials, bezogen auf ein Gesamtgewicht des aktiven Kathodenverbundmaterials, 3 Gew.-% oder weniger beträgt.

9. Aktives Kathodenverbundmaterial nach Anspruch 7 oder 8, wobei mindestens eines, ausgewählt aus dem ersten Metalloxid und dem zweiten Metalloxid, einen durchschnittlichen Partikeldurchmesser von etwa 1 nm bis etwa 1 $\mu$m aufweist.

10. Aktives Kathodenverbundmaterial nach Anspruch 9, wobei mindestens eines, ausgewählt aus dem ersten Metalloxid und dem zweiten Metalloxid, eine Gleichmäßigkeitsabweichung von 3% oder weniger aufweist.

11. Aktives Kathodenverbundmaterial nach einem der Ansprüche 7 bis 10, wobei das kohlenstoffhaltige Material eine verzweigte Struktur aufweist,

   das erste Metalloxid in der verzweigten Struktur verteilt ist, und
   die verzweigte Struktur eine Vielzahl von Partikeln aus kohlenstoffhaltigem Material umfasst, die miteinander in Kontakt stehen.

12. Aktives Kathodenverbundmaterial nach einem der Ansprüche 7 bis 10, wobei das kohlenstoffhaltige Material mindestens eine Struktur aufweist, ausgewählt aus einer kugelförmigen Struktur, einer spiralförmigen Struktur, in der kugelförmige Strukturen miteinander verbunden sind, und einer Clusterstruktur, in der kugelförmige Strukturen miteinander aggregiert sind,

   das erste Metalloxid in der kugelförmigen Struktur oder den kugelförmigen Strukturen verteilt ist, wobei die kugelförmige Struktur eine Größe von etwa 50 nm bis etwa 300 nm aufweist, die spiralförmige Struktur eine Größe von etwa 500 nm bis etwa 100 $\mu$m aufweist und die Clusterstruktur eine Größe von etwa 0,5 mm bis etwa 10 cm aufweist,
   das Verbundmaterial eine zerknitterte, facettierte Kugelstruktur oder eine ebene Struktur aufweist, und mindestens eines, ausgewählt aus dem ersten Metalloxid und dem zweiten Metalloxid innerhalb der zerknitterten, facettierten Kugelstruktur oder der ebenen Struktur oder auf einer Oberfläche der zerknitterten, facettierten Kugelstruktur oder der ebenen Struktur verteilt ist, und
   das kohlenstoffhaltige Material sich vom ersten Metalloxid um einen Abstand von 10 nm oder weniger erstreckt, mindestens 1 bis 20 kohlenstoffhaltige Materialschichten beinhaltet und eine Gesamtdicke von etwa 0,6 nm bis etwa 12 nm aufweist.

13. Aktives Kathodenverbundmaterial nach einem der Ansprüche 1 bis 12, wobei das Lithium-Übergangsmetalloxid durch Formel 1 oder 2 dargestellt ist:

**Formel 1** $Li_aCo_xM_yO_{2-b}A_b$

wobei in Formel 1,

$$1,0 \leq a \leq 1,2,\ 0 \leq b \leq 0,2,\ 0,9 \leq x \leq 1,\ 0 \leq y \leq 0,1\ \text{und}\ x+y=1,$$

und

M mindestens eines, ausgewählt aus Mangan (Mn), Niob (Nb), Vanadium (V), Magnesium (Mg), Gallium (Ga), Silicium (Si), Wolfram (W), Molybdän (Mo), Eisen (Fe), Chrom (Cr), Kupfer (Cu), Zink (Zn), Titan (Ti), Aluminium (Al) und Bor (B) ist und A F, S, Cl, Br oder eine Kombination davon ist; und

**Formel 2** $LiCoO_2$.

**14.** Kathode, umfassend das aktive Kathodenverbundmaterial nach einem der Ansprüche 1 bis 13.

**15.** Lithiumbatterie, umfassend die Kathode nach Anspruch 14.

## Revendications

**1.** Matériau actif de cathode composite comprenant :

un noyau comprenant un oxyde métallique de transition au lithium ; et
une enveloppe sur le noyau, la coque étant conforme à une surface du noyau,
dans lequel la coque comprend au moins un premier oxyde métallique représenté par la formule $M_aO_b$ ($0 < a \leq 3$, $0 < b < 4$, lorsque a vaut 1, 2 ou 3, b n'est pas un entier), un deuxième oxyde métallique représenté par $M_aO_c$ ($0 < a \leq 3$, $0 < c \leq 4$, à condition que lorsque a vaut 1, 2 ou 3, c est un entier), et un matériau carboné,
le premier oxyde métallique se trouve au sein d'une matrice de matériau carboné,
M est au moins un métal choisi parmi les groupes 2 à 13, le groupe 15 et le groupe 16 du tableau périodique des éléments,
le deuxième oxyde métallique comprend le même métal que le premier oxyde métallique, et
un rapport c/a de c à a dans le deuxième oxyde métallique est supérieur à un rapport b/a de b à a dans le premier oxyde métallique.

**2.** Matériau actif de cathode composite selon la revendication 1, dans lequel M est au moins un élément choisi parmi Al, Nb, Mg, Sc, Ti, Zr, V, W, Mn, Fe, Co, Pd, Cu, Ag, Zn, Sb et Se.

**3.** Matériau actif de cathode composite selon la revendication 1 ou 2, dans lequel le premier oxyde métallique est au moins un élément choisi parmi $Al_2O_z$ ($0 < z < 3$), $NbO_x$ ($0 < x < 2,5$), $MgO_x$ ($0 < x < 1$), $Sc_2O_z$ ($0 < z < 3$), $TiO_y$ ($0 < y < 2$), $ZrO_y$ ($0 < y < 2$), $V_2O_z$ ($0 < z < 3$), $WO_y$ ($0 < y < 2$), $MnO_y$ ($0 < y < 2$), $Fe_2O_z$ ($0 < z < 3$), $Co_3O_w$ ($0 < w < 4$), $PdO_x$ ($0 < x < 1$), $CuO_x$ ($0 < x < 1$), $AgO_x$ ($0 < x < 1$), $ZnO_x$ ($0 < x < 1$), $Sb_2O_z$ ($0 < z < 3$), et $SeO_y$ ($0 < y < 2$).

**4.** Matériau actif de cathode composite selon l'une quelconque des revendications 1 à 3, dans lequel le deuxième oxyde métallique est au moins un élément choisi parmi $Al_2O_3$, $NbO$, $NbO_2$, $Nb_2O_5$, $MgO$, $SC_2O_3$, $TiO_2$, $ZO_2$, $V_2O_3$, $WO_2$, $MnO_2$, $Fe_2O_5$, $CO_3O_4$, $PdO$, $CuO$, $AgO$, $ZnO$, $Sb_2O_3$, et $SeO_2$.

**5.** Matériau actif de cathode composite selon l'une quelconque des revendications 1 à 4, dans lequel le premier oxyde métallique est un produit de réduction du deuxième oxyde métallique.

**6.** Matériau actif de cathode composite selon l'une quelconque des revendications 1 à 5, dans lequel :

(i) la coque présente une épaisseur d'environ 1 nm à environ 5 $\mu$m, et/ou
(ii) le matériau actif de cathode composite comprend en outre un troisième métal dopé sur le noyau ; ou un troisième oxyde métallique appliqué sur le noyau,

dans lequel la coque repose sur le troisième oxyde métallique, et
le troisième oxyde métallique est un oxyde d'au moins un élément choisi parmi Al, Zr, W et Co.

7. Matériau actif de cathode composite selon la revendication 1, dans lequel la coque comprend au moins un élément choisi parmi un composite comprenant le premier oxyde métallique, le deuxième oxyde métallique et le matériau carboné, et un produit du broyage du composite.

8. Matériau actif de cathode composite selon la revendication 7, dans lequel une teneur en composite représente 3 % en poids ou moins par rapport au poids total du matériau actif de cathode composite.

9. Matériau actif de cathode composite selon la revendication 7 ou la revendication 8, dans lequel au moins un oxyde métallique choisi parmi le premier oxyde métallique et le deuxième oxyde métallique présente un diamètre de particule moyen d'environ 1 nm à environ 1 $\mu$m.

10. Matériau actif de cathode composite selon la revendication 9, dans lequel au moins un oxyde métallique choisi parmi le premier oxyde métallique et le deuxième oxyde métallique présente un écart d'uniformité de 3 % ou moins.

11. Matériau actif de cathode composite selon l'une quelconque des revendications 7 à 10, dans lequel le matériau carboné présente une structure ramifiée,

  le premier oxyde métallique est réparti dans la structure ramifiée, et
  la structure ramifiée comprend une pluralité de particules de matériau carboné en contact les unes avec les autres.

12. Matériau actif de cathode composite selon l'une quelconque des revendications 7 à 10, dans lequel le matériau carboné présente au moins une structure choisie parmi une structure sphérique, une structure spirale dans laquelle des structures sphériques sont reliées entre elles, et une structure en amas dans laquelle des structures sphériques sont agrégées les unes aux autres,

  le premier oxyde métallique est réparti dans la structure sphérique ou les structures sphériques, la structure sphérique présente une taille d'environ 50 nm à environ 300 nm, la structure spirale présente une taille variant d'environ 500 nm à environ 100 $\mu$m, et la structure en amas présente une taille variant d'environ 0,5 mm à environ 10 cm,
  le composite présente une structure sphérique à facettes froissées ou une structure plane, et au moins un oxyde métallique choisi parmi le premier oxyde métallique et le deuxième oxyde métallique est réparti à l'intérieur de la structure sphérique à facettes froissées ou de la structure plane, ou sur une surface de la structure sphérique à facettes froissées ou de la structure plane, et
  le matériau carboné s'étend à partir du premier oxyde métallique sur une distance de 10 nm ou moins, inclut au moins 1 à 20 couches de matériau carboné et présente une épaisseur totale d'environ 0,6 nm à environ 12 nm.

13. Matériau actif de cathode composite selon l'une quelconque des revendications 1 à 12, dans lequel l'oxyde métallique de transition au lithium est représenté par la formule 1 ou 2 :

  **Formule 1**     $Li_aCo_xM_yO_{2-b}A_b$

dans lequel dans la formule 1, $1,0 \leq a \leq 1,2$, $0 \leq b \leq 0,2$, $0,9 \leq x \leq 1$, $0 \leq y \leq 0,1$, et $x+y=1$,

et
M est au moins un élément choisi parmi le manganèse (Mn), le niobium (Nb), le vanadium (V), le magnésium (Mg), le gallium (Ga), le silicium (Si), le tungstène (W), le molybdène (Mo), le fer (Fe), le chrome (Cr), le cuivre (Cu), le zinc (Zn), le titane (Ti), l'aluminium (Al) et le bore (B), et A est F, S, Cl, Br ou une combinaison de ceux-ci ; et

  **Formule 2**     $LiCoO_2$.

**14.** Cathode comprenant le matériau actif de cathode composite selon l'une quelconque des revendications 1 à 13.

**15.** Batterie au lithium comprenant la cathode selon la revendication 14.

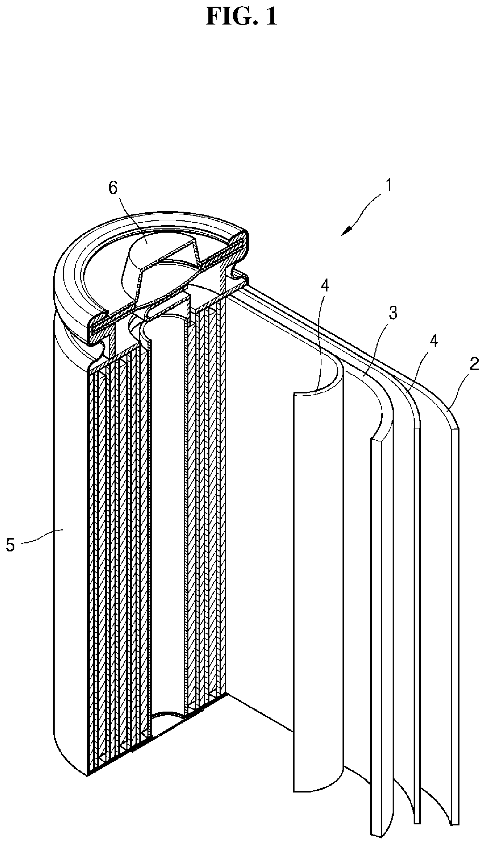

# FIG. 1

**EP 3 923 379 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015037680 A1